# EUROPÄISCHE PATENTSCHRIFT

(11) **EP 4 207 128 B1**
(45) Veröffentlichungstag und Bekanntmachung des Hinweises auf die Patenterteilung: **04.12.2024**
(21) Anmeldenummer: 22215026.0
(22) Anmeldetag: 20.12.2022
(51) Int. Cl.: G08C 17/02, H04W 4/80, H02J 7/00

(54) **KOMMUNIKATION EINES ELEKTROGERÄTS MIT EINEM COMPUTERSYSTEM**
COMMUNICATION OF AN ELECTRICAL DEVICE WITH A COMPUTER SYSTEM
COMMUNICATION D'UN APPAREIL ÉLECTRIQUE AVEC UN SYSTÈME INFORMATIQUE

(30) Priorität: 04.01.2022 DE 102022100101
(43) Veröffentlichungstag der Anmeldung: 05.07.2023
(73) Patentinhaber: Einhell Germany AG, 94405 Landau / Isar (DE)
(72) Erfinder: THANNHUBER, Dr. Markus, 94405 Landau/Isar (DE)
(74) Vertreter: Hofstetter, Schurack & Partner

(56) Entgegenhaltungen:
- WO-A1-2021/156824
- DE-A1- 102017 122 733

## Beschreibung

Die vorliegende Erfindung betrifft ein Kommunikationsmodul und ein Verfahren zur Kommunikation eines Elektrogeräts mit einem externen Computersystem.

Die Vernetzung physischer Geräte und virtueller Objekte miteinander sowie deren Zusammenarbeit anhand von Informations- und Kommunikationstechniken, auch bekannt unter Begriffen wie "Internet der Dinge" oder "Internet of Things", IoT, ist in zunehmenden Maße Teil des privaten und öffentlichen Alltags. Dadurch können die Geräte und System zum einen selbst untereinander interagieren, zum anderen auch mit menschlichen Benutzern interagieren.

Beispiele zur Anwendung reichen von der Heimautomatisierung, bei der beispielweise eine cloudbasierte Steuerung von Heizungssystemen, Klimaanlagen, Jalousien, Kühlschränken und so weiter erfolgt, über die Sicherheitstechnik, zum Beispiel zur videobasierten Objektüberwachung, die prädiktive Wartung von Fahrzeugen, Werkzeugen oder sonstigen Maschinen, bis hin zu den Lebenswissenschaften, wo beispielweise Informationen über den Gesundheits- oder Fitnesszustand, sportliche Aktivitäten oder medizinische Geräte, ausgetauscht und verarbeitet werden.

Ein weiteres Beispiel ist die cloudbasierte Steuerung und Überwachung von Elektrogeräten, wie etwa Elektrowerkzeugen, Haushaltgeräten oder Gartengeräten. So kann beispielsweise eine Bewässerungspumpe gemäß einem erlernten Bewässerungsverhalten abhängig vom Temperaturverlauf, Niederschlägen, Bewölkung und Bodenbeschaffenheit automatisiert eine Fläche optimal bewässern.

Ein Aspekt dabei ist es häufig, Messwerte und Informationen aus der realen Welt zu erfassen, etwa durch Sensoren unterschiedlichster Art, gegebenenfalls miteinander zu verknüpfen und in einem Netzwerk verfügbar zu machen. So kann beispielsweise der Zustand realer Objekte im Netzwerk verfügbar gemacht und weiterverarbeitet werden. Beispielsweise können so die aktuelle Nutzung eines Geräts, dessen Alterung oder die Umweltbedingungen in dessen Umgebung überwacht werden oder das Gerät gesteuert werden. Auch die Kollaboration mehrerer Geräte, beispielsweise im Kontext eines durchzuführenden Projekts oder auch ohne Projektbezug, kann so über das Netzwerk gesteuert und/oder überwacht werden.

Bekannte Elektrogeräte, die Teilnehmer in solchen Netzwerken sind, verfügen über integrierte Hardware zur Kommunikation mit externen Computersystemen der Cloud, welche spezifisch auf das jeweilige Elektrogerät abgestimmt sind beziehungsweise dementsprechend programmiert sind, die jeweils anfallenden Informationen, Daten, Messwerte und so weiter, des Elektrogeräts zu kommunizieren.

Es kann jedoch sein, dass bestimmte Elektrogeräte während eines signifikanten Teils ihrer Lebensdauer nicht mit dem Netzwerk kommunizieren und die integrierte Hardware zur Kommunikation dementsprechend ungenutzt ist. Etwa können ein loT-integrierter Rasenmäherroboter oder eine IoT-integrierte Umwälzpumpe eines Außenschwimmbeckens im Winter gegebenenfalls auf eine entsprechende Kommunikation verzichten, wohingegen nachrüstbare loT-integrierte Standheizungen für Kraftfahrzeuge die Kommunikation gerade im Winter nutzen könnten, gegebenenfalls nicht aber in warmen Sommermonaten. Es ist daher wünschenswert, temporär durch ein Elektrogerät ungenutzte Hardware zur Kommunikation für andere Elektrogeräte nutzen zu können.

Dokument DE 10 2017 122733 A1 beschreibt einen Akkupack für ein Elektrogerät, das eine Kommunikationseinrichtung aufweist, welche dazu ausgelegt ist, den Akkupack und/oder das Elektrogerät betreffende Daten über ein LPWAN zu senden und/oder zu empfangen. Die Übertragung von Daten zwischen der Kommunikationseinrichtung und dem Elektrogerät kann kabelgebundenen oder kabellos erfolgen. Der Akkupack kann überprüfen, ob die auf ihm installierte Firmware und die auf dem Elektrogerät installierte Firmware auf dem gleichen Versionsstand sind und automatisch für den Akkupack eine neue Firmware von einer Cloud herunterladen, falls die Firmware des Akkupacks einen älteren Versionsstand als bei dem Elektrogerät aufweisen sollte. Der Akkupack kann auch automatisch für das Elektrogerät eine neue Firmware von einer Cloud herunterladen, falls die Firmware des Elektrogeräts einen älteren Versionsstand als bei dem Ackupack aufweisen sollte.

Dokument WO 2021/156824 A1 beschreibt ein Akkupack mit einem NFC- Lesegerät, das einen NFC-Tag in einem Gerät scannen und erkennen kann. Der NFC-Tag kann verschiedene Informationen über das Gerät speichern, einschließlich eindeutiger Identifizierungsinformationen. Ein BMS des Akkupacks kann Betriebsdaten des Geräts mit den Daten des NFC-Lesegeräts kombinieren, um die Betriebsdaten dem Gerät zuzuordnen, welches sie erzeugt hat. Entsprechende Daten können dann von dem BMS an ein IoT-Modul des Akkupacks zur Übertragung an ein Mesh-Netzwerk übertragen werden.

Es ist eine Aufgabe der vorliegenden Erfindung, die Kommunikation eines Elektrogeräts mit einem externen Computersystem zu ermöglichen, ohne auf spezifisch auf das Elektrogerät angepasste Hardware zurückgreifen zu müssen.

Diese Aufgabe wird gelöst durch den jeweiligen Gegenstand der unabhängigen Ansprüche. Vorteilhafte und bevorzugte Ausführungsformen sind Gegenstand der abhängigen Ansprüche.

Die Erfindung beruht auf dem Gedanken, ein universelles Kommunikationsmodul zur Kommunikation des Elektrogeräts mit dem externen Computersystem zu verwenden, das zum einen Identifikationsinformationen betreffend das Elektrogerät erhalten kann und abhängig davon Konfigurationsinformationen abrufen kann, anhand derer es sich selbst konfigurieren kann, um die Kommunikation des Elektrogeräts mit dem externen Computersystem zu steuern.

Gemäß einem Aspekt der Erfindung wird ein Kommunikationsmodul zur Kommunikation eines Elektrogeräts, mit einem externen Computersystem angegeben. Das Kommunikationsmodul weist eine erste Kommunikationsschnittstelle auf, die zum drahtlosen Datenaustausch mit dem externen Computersystem eingerichtet ist, sowie eine zweite Kommunikationsschnittstelle, die zum drahtlosen oder drahtgebundenen Datenaustausch mit dem Elektrogerät eingerichtet ist. Das Kommunikationsmodul weist außerdem einen Verarbeitungsschaltkreis auf, der mit der ersten und der zweiten Kommunikationsschnittstelle verbunden ist und dazu eingerichtet ist, Identifikationsinformationen, welche das Elektrogerät identifizieren, zu erhalten. Der Verarbeitungsschaltkreis ist dazu eingerichtet, abhängig von den Identifikationsinformationen über die erste Kommunikationsschnittstelle Konfigurationsinformationen von dem externen Computersystem anzufordern und zu erhalten oder die Konfigurationsinformationen aus einem Speichergerät des Kommunikationsmoduls auszulesen. Der Verarbeitungsschaltkreis ist ferner dazu eingerichtet, basierend auf den Konfigurationsinformationen die Kommunikation des Elektrogeräts mit dem externen Computersystem zu steuern.

Mit anderen Worten ist der Verarbeitungsschaltkreis dazu eingerichtet, das Kommunikationsmodul, insbesondere den Verarbeitungsschaltkreis, zur Steuerung der Kommunikation zwischen dem Elektrogerät und dem externen Computersystem gemäß den Konfigurationsinformationen zu konfigurieren.

Insbesondere ist das Elektrogerät extern zu dem externen Computersystem angeordnet und extern zu dem Kommunikationsmodul und kann daher auch als externes Elektrogerät bezeichnet werden. Das externe Computersystem ist ebenfalls extern zu dem Kommunikationsmodul angeordnet. Bei dem Elektrogerät, dem externen Computersystem und dem Kommunikationsmodul handelt es sich also um drei voneinander physisch getrennte beziehungsweise trennbare Objekte. Insbesondere ist das Kommunikationsmodul nicht dauerhaft in dem Elektrogerät oder an dem Elektrogerät verbaut.

Bei dem externen Computersystem kann es sich um einen Servercomputer, auch als Cloudcomputer bezeichnet, handeln oder um einen physischen und/oder virtuellen Verbund von Servercomputern. Das externe Computersystem kann alternativ oder zusätzlich eines oder mehrere mobile elektronische Geräte, wie etwa Mobiltelefone, Smartphones, Tablet-Computer, Notebook-Computer und so weiter, beinhalten.

Die drahtlose Kommunikation zwischen dem Kommunikationsmodul und dem externen Computersystem kann beispielsweise über ein Funknetzwerk, etwa ein Mobilfunknetz, ein WLAN-Netz oder ein Niedrigenergieweitverkehrnetz, LPWAN (englisch: "Low Power Wide Area Network"), insbesondere ein NB-IoT-Netzwerk (englisch: "Narrowband Internet of Things") erfolgen. Das Funknetz kann insbesondere gemäß GSM, UMTS, LTE, 5G, 6G etc. oder NB-IoT ausgestaltet sein. Ferner sind auch nicht zellbasierte Ansätze, wie etwa LoRa, ZigBee oder SigFox möglich.

Die Identifikationsinformationen erlauben es, das konkrete Elektrogerät oder den Typ des konkreten Elektrogeräts zu identifizieren. Es kann also durch die Identifikationsinformationen eine Identifizierung genau eines einzigen Elektrogeräts möglich sein oder lediglich eine Identifikation gleichartig konstruierter und/oder eingerichteter Elektrogeräte. Gleichartig kann dabei insbesondere derart verstanden werden, dass dieselben Konfigurationsinformationen zur Konfiguration der Kommunikation gleichartiger Elektrogeräte mit dem externen Computersystem verwendbar sind.

Der Verarbeitungsschaltkreis kann die Identifikationsinformationen je nach Ausgestaltungsform des Kommunikationsmoduls auf unterschiedliche Arten erhalten. Beispielsweise kann das Kommunikationsmodul ein Erfassungsgerät, beispielsweise ein Lesegerät zum Lesen visueller Informationen oder elektronisch gespeicherter Informationen, beispielsweise mittels RFID-Technologie, aufweisen, um die Identifikationsinformationen zu erhalten beziehungsweise zu erfassen und an den Verarbeitungsschaltkreis zu übermitteln. Alternativ oder zusätzlich kann der Verarbeitungsschaltkreis die Identifikationsinformationen in elektronischer, insbesondere digitaler, Form über die zweite Kommunikationsschnittstelle dem Elektrogerät erhalten, wenn eine Kommunikationsverbindung zwischen dem Elektrogerät und der Kommunikationsschnittstelle des Kommunikationsmoduls hergestellt ist oder über eine weitere Kommunikationsschnittstelle des Kommunikationsmoduls zum Datenaustausch mit dem Elektrogerät. Alternativ kann auch eine verbindungslose Kommunikation zwischen dem Verarbeitungsschaltkreis beziehungsweise der weiteren Kommunikationsschnittstelle des Kommunikationsmoduls und dem Elektrogerät, beispielsweise mittels Bluetooth oder einem sonstigen Rundfunk- beziehungsweise Broadcastsignal, erfolgen. Alternativ oder zusätzlich kann der Verarbeitungsschaltkreis die Identifikationsinformationen auch über eine mechanische und elektrische Verbindung des Kommunikationsmoduls mit dem Elektrogerät erhalten, beispielsweise über einen digitalen Bitcode, der über entsprechende Kontakte übermittelt wird, oder über die Auswertung spezifischer Spannungs- und/oder Widerstandswerte an solchen Kontakten.

Zusammenfassend kann der Verarbeitungsschaltkreis die Identifikationsinformationen insbesondere über das Erfassungsgerät des Kommunikationsmoduls, über die zweite Kommunikationsschnittstelle oder über die weitere Kommunikationsschnittstelle des Kommunikationsmoduls zum Datenaustausch mit dem Elektrogerät erhalten.

Die Konfigurationsinformationen sind den Identifikationsinformationen und damit dem konkreten Elektrogerät oder gleichartigen Elektrogeräten zugeordnet. Die Zuordnung kann vorgegeben sein, insbesondere auf dem externen Computersystem gespeichert sein. Die Konfigurationsinformationen enthalten insbesondere Informationen dahingehend, welche Daten, Informationen und Befehle der Verarbeitungsschaltkreis über die zweite Kommunikationsschnittstelle erhält, wie der Verarbeitungsschaltkreis diese gegebenenfalls weiterverarbeiten soll beziehungsweise kann und/oder wie und in welcher Form die Informationen, Daten und Befehle beziehungsweise deren weiterverarbeitete Varianten über die erste Kommunikationsschnittstelle an das externe Computersystem übermittelt werden sollen. Umgekehrt können die Konfigurationsinformationen auch Informationen betreffend Informationen, Befehle, Anweisungen und dergleichen enthalten, welche das Kommunikationsmodul über die erste Kommunikationsschnittstelle von dem externen Computersystem erhalten kann und wie diese gegebenenfalls vorverarbeitet werden können und in Steuerbefehle oder sonstige Daten und Informationen umgewandelt und an das Elektrogerät über die zweite Kommunikationsschnittstelle übermittelt werden können. Die Konfigurationsinformationen enthalten solche Informationen insbesondere in indirekter Form derart, dass der Verarbeitungsschaltkreis das Kommunikationsmodul konfigurieren kann, so dass der Verarbeitungsschaltkreis die Kommunikation entsprechend steuern kann. Der Verarbeitungsschaltkreis kann dazu insbesondere eines oder mehrere Softwaremodule beinhalten, die abhängig von den Konfigurationsinformationen konfiguriert werden können.

Erfindungsgemäß wird also insbesondere ein universell nutzbares Kommunikationsmodul angegeben, dass unabhängig von der konkreten Ausgestaltung des Elektrogeräts und unabhängig von dessen konkreten Erfordernissen hinsichtlich der Kommunikation mit dem externen Computersystem zur Herstellung einer Kommunikationsverbindung verwendet werden kann. Dies wird insbesondere erreicht, indem das Kommunikationsmodul die Identifikationsinformationen für das jeweilige Elektrogerät je nach Einsatz des Kommunikationsmoduls erhalten kann, beispielsweise von dem Elektrogerät oder einer sonstigen Datenquelle, und erst basierend darauf die Konfigurationsinformationen erhält beziehungsweise umsetzt.

Das Kommunikationsmodul kann dementsprechend für beliebige kompatible Elektrogeräte verwendet werden, wobei Kompatibilität dabei derart verstanden werden kann, dass zum einen über die zweite Kommunikationsschnittstelle Datenaustausch mit dem Kommunikationsmodul möglich ist und dass die entsprechenden Konfigurationsinformationen den Identifikationsinformationen zugeordnet sind.

Gemäß zumindest einer Ausführungsform des Kommunikationsmoduls weist dieses einen elektrischen Energiespeicher zur autarken Energieversorgung des Kommunikationsmoduls auf.

Mit anderen Worten ist der Energiespeicher dazu ausgelegt und in der Lage, einen gesamten Energiebedarf des Kommunikationsmoduls zum Betrieb des Kommunikationsmoduls, insbesondere zum Identifizieren der Identifikationsinformationen, zum Anfordern und Erhalten beziehungsweise Auslesen der Konfigurationsinformationen und zur Steuerung der Kommunikation des Elektrogeräts mit dem externen Computersystem, zu decken.

Hierdurch wird die Flexibilität beim Einsatz des Kommunikationsmoduls entscheidend erhöht, da an dem Elektrogerät keinerlei Vorkehrungen getroffen werden müssen, um die Energieversorgung des Kommunikationsmoduls zu gewährleisten. Dies kann insbesondere vorteilhaft sein, wenn es sich bei dem Elektrogerät selbst um ein Elektrogerät mit relativ geringem Energiebedarf handelt, so dass dessen Energieversorgung entsprechend knapp ausgelegt sein kann.

Der Energiespeicher kann dabei in bevorzugten Ausführungsformen wenigstens eine Akkumulatorzelle enthalten, etwa eine lithiumbasierte Akkumulatorzelle.

Das Kommunikationsmodul kann in bevorzugten Ausführungsformen als Akkupack für ein Elektrogerät ausgelegt sein.

Das Akkupack kann lösbar, insbesondere zerstörungsfrei lösbar, mit einem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen.

Eine elektrische Verbindung der wenigstens einen Akkumulatorzelle mit dem Elektrogerät, insbesondere einem Motor des Elektrogeräts, kann beispielsweise über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen. Dabei können die lösbaren elektrischen Kontakte auf Seiten des Kommunikationsmoduls Teil der zweiten Kommunikationsschnittstelle sein oder separat dazu vorgesehen werden.

Mit Vorteil kann das Kommunikationsmodul dementsprechend nicht nur sich selbst autark mit Energie versorgen, sondern auch teilweise oder vollständig das Elektrogerät, etwa wenn es sich dabei um ein Elektrowerkzeug, ein Haushaltsgerät oder ein Gartengerät oder dergleichen handelt.

Gemäß zumindest einer Ausführungsform ist der Verarbeitungsschaltkreis dazu eingerichtet, über die zweite Kommunikationsschnittstelle einen digitalen Code von dem Elektrogerät zu erhalten und die Identifikationsinformationen basierend auf dem digitalen Code zu bestimmen.

Bei dem digitalen Code handelt es sich insbesondere um einen Bit-Code, also etwa eine Bit-Folge, die mittels einer digitalen Signalübertragung von dem Elektrogerät gesendet und über die zweite Kommunikationsschnittstelle von dem Kommunikationsmodul erhalten und an den Verarbeitungsschaltkreis übermittelt werden kann.

Das digitale Signal beziehungsweise der digitale Code kann dabei insbesondere drahtgebunden über entsprechende elektrische Kontakte der zweiten Kommunikationsschnittstelle oder drahtlos übermittelt werden. Auf diese Weise kann die zum Erhalten der Identifikationsinformationen erforderliche Hardware auf Seiten des Kommunikationsmoduls vereinfacht werden.

Gemäß zumindest einer Ausführungsform weist das Kommunikationsmodul ein Lesegerät zur Radiofrequenz-Identifikation, RFID (englisch: "Radio Frequency Identification") auf, das mit dem Verarbeitungsschaltkreis verbunden ist und dazu eingerichtet ist, die Identifikationsinformationen von einem RFID-Transponder des Elektrogeräts zu erhalten und insbesondere an den Verarbeitungsschaltkreis zu übermittelt.

Auf diese Weise kann insbesondere eine kontaktlose Übertragung der Identifikationsinformationen erzielt werden, was beispielsweise vorteilhaft ist, wenn die zweite Kommunikationsschnittstelle drahtlos ausgestaltet ist. Zudem kann der RFID-Transponder, der auch als RFID-Tag bezeichnet wird, ohne weiteres ausgetauscht oder nachträglich angebracht werden.

Auch falls das Kommunikationsmodul zur Herstellung der Kommunikationsverbindung mit dem Elektrogerät mechanisch verbunden wird, kann die Übermittlung der Identifikationsinformationen mittels RFID vorteilhaft sein, da der RFID-Transponder flexibel an beliebigen Positionen des Elektrogeräts beziehungsweise auch unabhängig von dem Elektrogerät angeordnet werden kann, so dass das Kommunikationsmodul beispielsweise vor Anbringen an dem Elektrogerät die Identifikationsinformationen erhalten kann. Auch im Hinblick auf die Nachrüstbarkeit von IoT Funktionalität sind RFIDbasierte Lösungen vorteilhaft.

Gemäß zumindest einer Ausführungsform weist das Kommunikationsmodul ein optisches Lesegerät auf, das mit dem Verarbeitungsschaltkreis verbunden ist und dazu eingerichtet ist, einen visuell lesbaren Code des Elektrogeräts zu lesen, wobei der Verarbeitungsschaltkreis dazu eingerichtet ist, die Identifikationsinformationen basierend auf dem gelesenen Code zu bestimmen.

Der visuell lesbare Code kann beispielsweise als Strichcode oder Barcode oder zweidimensionaler QR-Code oder dergleichen oder auch in Form einer Zeichenfolge oder dergleichen gegeben sein. Das optische Lesegerät kann beispielsweise als Barcode-Scanner oder QR-Scanner oder als Kameramodul ausgestaltet sein.

Alternativ kann das optische Lesegerät auch extern zu dem Kommunikationsmodul vorgesehen werden, beispielsweise in einem mobilen elektronischen Endgerät, wie etwa einem Mobiltelefon. Das optische Lesegerät kann dann beispielsweise eine Kamera des Mobiltelefons oder sonstigen mobilen elektronischen Endgeräts beinhalten. Das mobile elektronische Endgerät steht dann ebenfalls in einer Kommunikationsverbindung mit dem Kommunikationsmodul und/oder mit dem externen Computersystem. Beispielsweise kann das elektronische Endgerät den gelesenen Code an das Kommunikationsmodul übermitteln und dieses kann dann die Konfigurationsinformation entsprechend auslesen beziehungsweise anfordern und erhalten.

Gemäß zumindest einer Ausführungsform weist das Kommunikationsmodul beispielsweise die zweite Kommunikationsschnittstelle wenigstens einen elektrischen Kontakt zur elektrischen Verbindung des Kommunikationsmoduls mit dem Elektrogerät auf, wobei der Verarbeitungsschaltkreis mit dem wenigstens einen elektrischen Kontakt verbunden ist. Der Verarbeitungsschaltkreis ist dazu eingerichtet, einen Spannungswert und/oder einen Widerstandswert an dem wenigstens einen elektrischen Kontakt zu bestimmen, wenn das Kommunikationsmodul mittels des wenigstens einen elektrischen Kontakts mit dem Elektrogerät verbunden ist. Der Verarbeitungsschaltkreis ist dazu eingerichtet, die Identifikationsinformationen basierend auf dem Spannungswert und/oder dem Widerstandswert zu bestimmen.

So kann eine besonders einfache Bestimmung der Identifikationsinformationen realisiert werden.

Gemäß zumindest einer Ausführungsform ist die zweite Kommunikationsschnittstelle als Universal-Asynchron-Receiver-Transmitter-Schnittstelle, UART-Schnittstelle, ausgestaltet.

Eine solche Ausführung ist aufgrund der geringen Komplexität von UART-Schnittstellen und aufgrund dessen, dass zum Datenaustausch lediglich zwei Kommunikationsleitungen erforderlich sind, besonders vorteilhaft.

In alternativen Ausführungsformen kann die zweite Kommunikationsschnittstelle auch als I²C-Schnittstelle (englisch: "Inter-Integrated Circuit") ausgestaltet sein.

Gemäß zumindest einer Ausführungsform ist der Verarbeitungsschaltkreis dazu eingerichtet, eine Anfrage, einen Befehl oder einen Datensatz von dem Elektrogerät über die zweite Kommunikationsschnittstelle zu erhalten und die Anfrage, den Befehl oder den Datensatz über die erste Kommunikationsschnittstelle gemäß den Konfigurationsinformationen beziehungsweise gemäß der erfolgten Konfiguration anhand der Konfigurationsinformationen an das externe Computersystem zu übermitteln. Alternativ kann der Verarbeitungsschaltkreis die Anfrage, den Befehl oder den Datensatz verarbeiten und den verarbeiteten Befehl, Datensatz oder Anfrage über die erste Kommunikationsschnittstelle an das externe Computersystem übermitteln.

Gemäß zumindest einer Ausführungsform ist der Verarbeitungsschaltkreis dazu eingerichtet, eine weitere Anfrage, einen weiteren Befehl oder einen weiteren Datensatz von dem externen Computersystem über die erste Kommunikationsschnittstelle zu erhalten. Der Verarbeitungsschaltkreis ist dazu eingerichtet, die weitere Anfrage, den weiteren Befehl oder den weiteren Datensatz über die zweite Kommunikationsschnittstelle gemäß den Konfigurationsinformationen an das Elektrogerät zu übermitteln oder das Elektrogerät gemäß den Konfigurationsinformationen abhängig von der weiteren Anfrage, dem weiteren Befehl oder dem weiteren Datensatz zu steuern oder zu parametrieren.

Gemäß zumindest einer Ausführungsform weist das Kommunikationsmodul ein Gehäuse auf, innerhalb dessen der Verarbeitungsschaltkreis angeordnet ist und innerhalb dessen vorzugsweise auch die erste Kommunikationsschnittstelle und/oder die zweite Kommunikationsschnittstelle angeordnet sind.

In bevorzugten Ausführungsformen weist das Gehäuse mechanische Verbindungsmittel zur lösbaren mechanischen Verbindung des Kommunikationsmoduls mit dem Elektrogerät auf.

Beispielsweise sind die mechanischen Verbindungsmittel zum Herstellen einer Rastverbindung und/oder einer Steckverbindung und/oder einer Klemmverbindung ausgestaltet.

Die mechanischen Verbindungsmittel und die zweite Kommunikationsschnittstelle können beispielsweise derart aufeinander abgestimmt sein, dass bei Herstellung der mechanischen Verbindung mittels der mechanischen Verbindungsmittel automatisch auch eine elektrische Verbindung entsprechender Kontakte der zweiten Kommunikationsschnittstelle mit entsprechenden Kontakten des Elektrogeräts hergestellt wird.

Gemäß einem weiteren Aspekt der Erfindung wird auch ein System zur Kommunikation eines Elektrogeräts mit einem externen Computersystem angegeben, wobei das System ein erfindungsgemäßes Kommunikationsmodul aufweist. Das System weist außerdem das Elektrogerät und/oder das externe Computersystem auf.

Gemäß einem weiteren Aspekt der Erfindung wird ein Verfahren zur Kommunikation eines externen Elektrogeräts mit einem externen Computersystem angegeben. Dabei werden Identifikationsinformationen, welche das Elektrogerät identifizieren, von einem Kommunikationsmodul erhalten, insbesondere über eine zweite Kommunikationsschnittstelle des Kommunikationsmoduls. Abhängig von den Identifikationsinformationen werden mittels des Kommunikationsmoduls, insbesondere über eine erste Kommunikationsschnittstelle des Kommunikationsmoduls, Konfigurationsinformationen drahtlos von dem externen Computersystem angefordert und erhalten oder die Konfigurationsinformationen werden abhängig von den Identifikationsinformationen aus einem Speichergerät des Kommunikationsmoduls ausgelesen. Die Kommunikation des Elektrogeräts mit dem externen Computersystem wird basierend auf den Konfigurationsinformationen mittels des Kommunikationsmoduls, insbesondere eines Verarbeitungsschaltkreises des Kommunikationsmoduls, gesteuert.

Mit anderen Worten wird das Kommunikationsmodul abhängig von den Konfigurationsinformationen zur Steuerung der Kommunikation zwischen dem Elektrogerät und dem externen Computersystem konfiguriert.

Weitere Ausführungsformen des erfindungsgemäßen Verfahrens folgen unmittelbar aus den verschiedenen Ausgestaltungen des erfindungsgemäßen Kommunikationsmoduls beziehungsweise des erfindungsgemäßen Systems und jeweils umgekehrt. Insbesondere lassen sich einzelne Merkmale und entsprechende Erläuterungen bezüglich der verschiedenen Ausführungsformen zu dem erfindungsgemäßen Kommunikationsmodul analog auf entsprechende Ausführungsformen des erfindungsgemäßen Verfahrens übertragen. Insbesondere ist das erfindungsgemäße Kommunikationsmodul oder das erfindungsgemäße System zum Durchführen eines erfindungsgemäßen Verfahrens ausgebildet oder programmiert oder führt ein solches Verfahren durch.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- Fig. 1: eine schematische Darstellung eines erfindungsgemäßen Systems mit einer beispielhaften Ausführungsform eines erfindungsgemäßen Kommunikationsmoduls;
- Fig. 2: eine schematische Darstellung eines erfindungsgemäßen Systems mit einer weiteren beispielhaften Ausführungsform eines erfindungsgemäßen Kommunikationsmoduls; und
- Fig. 3: eine schematische Darstellung eines erfindungsgemäßen Systems mit einer weiteren beispielhaften Ausführungsform eines erfindungsgemäßen Kommunikationsmoduls.

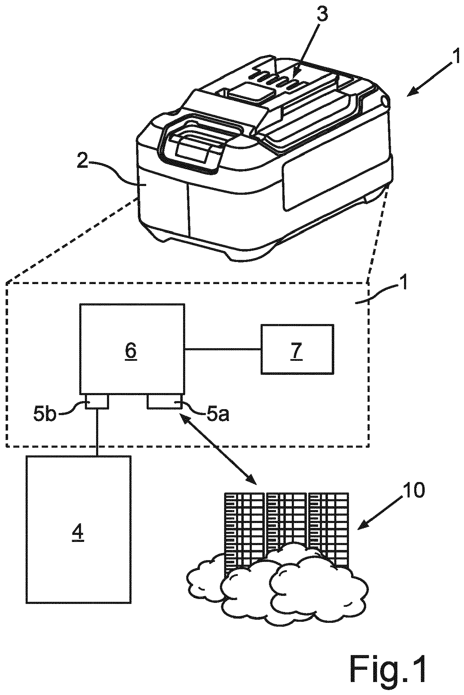

In Fig. 1 ist schematisch ein erfindungsgemäßes System mit einer beispielhaften Ausführungsform eines erfindungsgemäßen Kommunikationsmoduls 1, einem Elektrogerät 4 und einem externen Computersystem 10 dargestellt.

Ohne Beschränkung der Allgemeinheit ist das Kommunikationsmodul 1 oben in Fig. 1 schematisch als Akkupack für das Elektrogerät 4 ausgestaltet, wobei das Akkupack ein Gehäuse 2 und eine Schnittstelle 3 zur mechanischen und elektrischen Verbindung des Gehäuses 2 beziehungsweise des Kommunikationsmoduls 1 an einem entsprechenden Gehäuse (nicht dargestellt) des Elektrogeräts 4 aufweist. Dabei handelt es sich um eine bevorzugte Ausführungsform des erfindungsgemäßen Kommunikationsmoduls 1, andere Ausführungsformen sind jedoch ebenfalls möglich.

Das Kommunikationsmodul 1 weist einen Verarbeitungsschaltkreis 6 sowie eine erste Kommunikationsschnittstelle 5a zur drahtlosen Kommunikation mit dem externen Computersystem 10 auf. Das Kommunikationsmodul 1 weist außerdem eine zweite Kommunikationsschnittstelle 5b zur drahtlosen oder drahtgebundenen Kommunikation mit dem Elektrogerät 4 auf. Die Schnittstelle 3 kann im Falle der Ausgestaltung des Kommunikationsmoduls 1 als Akkupack einen Teil der zweiten Kommunikationsschnittstelle 5b darstellen oder zusätzlich zu der zweiten Kommunikationsschnittstelle 5b vorgesehen sein.

Optional, insbesondere wenn das Kommunikationsmodul 1 als Akkupack ausgestaltet ist, weist das Kommunikationsmodul 1 außerdem einen elektrischen Energiespeicher 7, insbesondere eine oder mehrere in Reihe und/oder parallel zueinander verschaltete Akkumulatorzellen zur autarken Energieversorgung sämtlicher elektronischer Komponenten des Kommunikationsmoduls 1 und optional auch zur Energieversorgung des Elektrogeräts 4 auf.

Der Verarbeitungsschaltkreis 6 kann über die zweite Kommunikationsschnittstelle 5b, beispielsweise in Form eines digitalen Codes, Identifikationsinformationen betreffend das Elektrogerät 4 erhalten. Der Verarbeitungsschaltkreis 6 kann dann ein Speichergerät (nicht dargestellt) des Kommunikationsmoduls 1 auslesen, um den Identifikationsinformationen vorab zugeordnete Konfigurationsinformationen zu erhalten. Alternativ kann der Verarbeitungsschaltkreis 6 abhängig von den Identifikationsinformationen die Konfigurationsinformationen über die erste Kommunikationsschnittstelle 5a von dem externen Computersystem 10 anfordern und als Reaktion darauf erhalten.

Der Verarbeitungsschaltkreis 6, insbesondere ein Softwaremodul (nicht dargestellt) des Kommunikationsmoduls 1 beziehungsweise des Verarbeitungsschaltkreises 6, ist dazu eingerichtet, das Kommunikationsmodul 1 gemäß den Konfigurationsinformationen zu konfigurieren.

Nachdem das Kommunikationsmodul 1 auf diese Weise konfiguriert wurde, kann es die Kommunikation des Elektrogeräts 4 mit dem externen Computersystem 10 steuern beziehungsweise eine entsprechende Kommunikationsverbindung herstellen und aufrechterhalten.

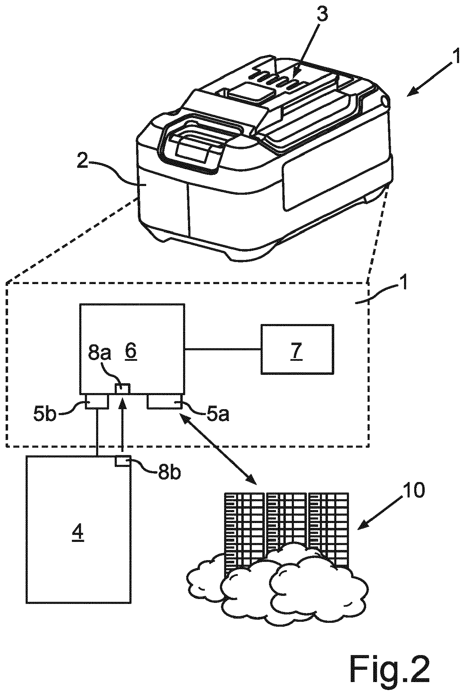

In der Fig. 2 ist ein weiteres System entsprechend der Erfindung mit einer weiteren beispielhaften Ausführungsform des Kommunikationsmoduls 1 schematisch dargestellt. Das Kommunikationsmodul 1 basiert auf dem bezüglich Fig. 1 beschriebenen Kommunikationsmodul 1, wobei die Identifikationsinformationen hier von einem RFID-Lesegerät 8a des Kommunikationsmoduls 1 aus einem RFID-Transponder 8b des Elektrogeräts 4 ausgelesen werden.

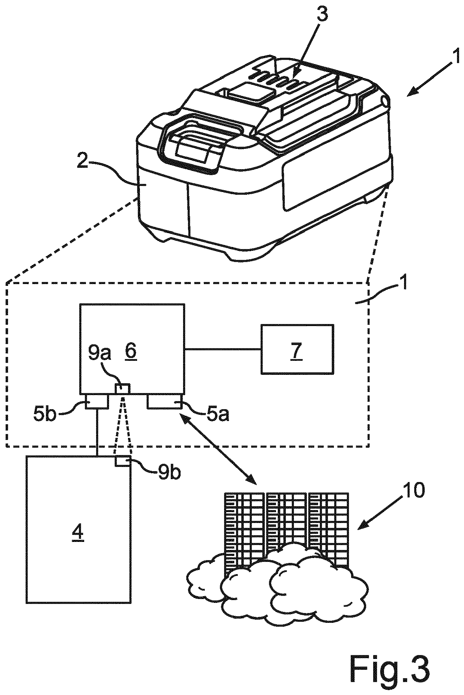

In Fig. 3 ist eine weitere Ausführungsform des Systems mit einer weiteren beispielhaften Ausführungsform des Kommunikationsmoduls 1, welches auf dem Kommunikationsmodul 1 der Fig. 1 beruht, dargestellt.

Hier weist das Kommunikationsmodul 1 ein optisches Lesegerät 9a auf, beispielsweise einen Barcode-Scanner, der einen entsprechenden visuell lesbaren Code 9b des Elektrogeräts 4 lesen kann und den gelesenen Code an den Verarbeitungsschaltkreis 6 übermitteln kann, um die Identifikationsinformationen, die in dem gelesenen Code enthalten sind, bereitzustellen.

Wie insbesondere anhand der Figuren erläutert wurde, erlaubt es die Erfindung, ein universelles und flexibel einsetzbares Kommunikationsmodul zu verwenden, um die Kommunikation eines Elektrogeräts mit einem externen Computersystem zu ermöglichen.

In bevorzugten Ausführungsformen kommuniziert das Kommunikationsmodul über eine UART-Schnittstelle oder eine I²C-Schnittstelle mit dem Elektrogerät und erhält die Konfigurationsinformationen drahtlos aus einer Cloud.

### BEZUGSZEICHENLISTE:

- 1: Kommunikationsmodul
- 2: Gehäuse
- 3: Schnittstelle
- 4: Elektrogerät
- 5a: Kommunikationsschnittstelle
- 5b: Kommunikationsschnittstelle
- 6: Verarbeitungsschaltkreis
- 7: Energiespeicher
- 8a: RFID-Lesegerät
- 8b: RFID-Transponder
- 9a: optisches Lesegerät
- 9b: visuell lesbarer Code
- 10: externes Computersystem

## Patentansprüche

1. Kommunikationsmodul (1) zur Kommunikation eines Elektrogeräts (4) mit einem externen Computersystem (10), das Kommunikationsmodul (1) aufweisend
- eine erste Kommunikationsschnittstelle (5a), die zum drahtlosen Datenaustausch mit dem externen Computersystem (10) eingerichtet ist, und eine zweite Kommunikationsschnittstelle (5b), die zum Datenaustausch mit dem Elektrogerät (4) eingerichtet ist;
- einen Verarbeitungsschaltkreis (6), der dazu eingerichtet ist,
- Identifikationsinformationen, welche das Elektrogerät (4) identifizieren, zu erhalten;
- abhängig von den Identifikationsinformationen über die erste Kommunikationsschnittstelle (5a) Konfigurationsinformationen von dem externen Computersystem (10) anzufordern und zu erhalten oder abhängig von den Identifikationsinformationen die Konfigurationsinformationen aus einem Speichergerät des Kommunikationsmoduls (1) auszulesen, wobei die Konfigurationsinformationen den Identifikationsinformationen zugeordnet sind;
- den Verarbeitungsschaltkreis (6) zur Steuerung der Kommunikation zwischen dem Elektrogerät (4) und dem externen Computersystem (19) gemäß den Konfigurationsinformationen zu konfigurieren; und
- basierend auf den Konfigurationsinformationen die Kommunikation des Elektrogeräts (4) mit dem externen Computersystem (10) zu steuern.

2. Kommunikationsmodul (1) nach Anspruch 1, aufweisend einen elektrischen Energiespeicher (7) zur autarken Energieversorgung des Kommunikationsmoduls (1).

3. Kommunikationsmodul (1) nach Anspruch 2, wobei der Energiespeicher (7) wenigstens eine Akkumulatorzelle enthält.

4. Kommunikationsmodul (1) nach einem der vorhergehenden Ansprüche, wobei der Verarbeitungsschaltkreis (6) dazu eingerichtet ist, über die zweite Kommunikationsschnittstelle (5b) einen digitalen Code von dem Elektrogerät (4) zu erhalten und die Identifikationsinformationen basierend auf dem digitalen Code zu bestimmen.

5. Kommunikationsmodul (1) nach einem der vorhergehenden Ansprüche, aufweisend ein Lesegerät (8a) zur Radiofrequenz-Identifikation, RFID, das mit dem Verarbeitungsschaltkreis (6) verbunden ist und dazu eingerichtet ist, die Identifikationsinformationen von einem RFID-Transponder (8b) des Elektrogeräts (4) zu erhalten.

6. Kommunikationsmodul (1) nach einem der vorhergehenden Ansprüche, aufweisend ein optisches Lesegerät (9a), das das mit dem Verarbeitungsschaltkreis (6) verbunden ist und dazu eingerichtet ist, einen visuell lesbaren Code (9b) des Elektrogeräts (4) zu lesen, wobei der Verarbeitungsschaltkreis (6) dazu eingerichtet ist, die Identifikationsinformationen basierend auf dem gelesenen visuell lesbaren Code zu bestimmen.

7. Kommunikationsmodul (1) nach einem der vorhergehenden Ansprüche, aufweisend wenigstens einen elektrischen Kontakt zur elektrischen Verbindung des Kommunikationsmoduls (1) mit dem Elektrogerät (4), wobei der Verarbeitungsschaltkreis (6)
- mit dem wenigstens einen elektrischen Kontakt verbunden ist und dazu eingerichtet ist, einen Spannungswert und/oder einen Widerstandswert an dem wenigstens einen elektrischen Kontakt zu bestimmen, wenn das Kommunikationsmodul (1) mittels des wenigstens einen elektrischen Kontakts mit dem Elektrogerät (4) verbunden ist; und
- die Identifikationsinformationen basierend auf dem Spannungswert und/oder dem Widerstandswert zu bestimmen.

8. Kommunikationsmodul (1) nach einem der vorhergehenden Ansprüche, wobei die eine zweite Kommunikationsschnittstelle (5b) als Universal-Asynchron-Receiver-Transmitter-Schnittstelle ausgestaltet ist.

9. Kommunikationsmodul (1) nach einem der Ansprüche 1 bis 7, wobei die eine zweite Kommunikationsschnittstelle (5b) als I²C-Schnittstelle ausgestaltet ist.

10. Kommunikationsmodul (1) nach einem der vorhergehenden Ansprüche, wobei der Verarbeitungsschaltkreis (6) dazu eingerichtet ist, eine Anfrage, einen Befehl oder einen Datensatz von dem Elektrogerät (4) über die zweite Kommunikationsschnittstelle (5b) zu erhalten und
- die Anfrage, den Befehl oder den Datensatz über die erste Kommunikationsschnittstelle (5a) gemäß der anhand der Konfigurationsinformationen erfolgten Konfiguration an das externe Computersystem (10) zu übermitteln; oder
- die Anfrage, den Befehl oder den Datensatz zu verarbeiten und die verarbeitete Anfrage, den verarbeiteten Befehl oder den verarbeiteten Datensatz über die erste Kommunikationsschnittstelle (5a) gemäß der anhand dr Konfigurationsinformationen erfolgten Konfiguration an das externe Computersystem (10) zu übermitteln.

11. Kommunikationsmodul (1) nach einem der vorhergehenden Ansprüche, wobei der Verarbeitungsschaltkreis (6) dazu eingerichtet ist eine weitere Anfrage, einen weiteren Befehl oder einen weiteren Datensatz von dem externen Computersystem (10) über die erste Kommunikationsschnittstelle (5a) zu erhalten und
- die weitere Anfrage, den weiteren Befehl oder den weiteren Datensatz über die zweite Kommunikationsschnittstelle (5b) gemäß den Konfigurationsinformationen an das Elektrogerät (4) zu übermitteln; oder
- das Elektrogerät (4) gemäß den Konfigurationsinformationen abhängig von der weiteren Anfrage, dem weiteren Befehl oder dem weiteren Datensatz zu steuern oder zu parametrieren.

12. Kommunikationsmodul (1) nach einem der vorhergehenden Ansprüche, aufweisend ein Gehäuse (2), innerhalb dessen der Verarbeitungsschaltkreis (6) angeordnet ist.

13. Kommunikationsmodul (1) nach Anspruch 12, wobei die erste Kommunikationsschnittstelle (5a) und/oder die zweite Kommunikationsschnittstelle (5b) innerhalb des Gehäuses (2) angeordnet sind.

14. Kommunikationsmodul (1) nach einem der Ansprüche 12 oder 13, wobei das Gehäuse (2) mechanische Verbindungsmittel (3) zur lösbaren mechanischen Verbindung des Kommunikationsmoduls (1) mit dem Elektrogerät (4) aufweist.

15. Verfahren zur Kommunikation eines Elektrogeräts (4) mit einem externen Computersystem (10), wobei
- Identifikationsinformationen, welche das Elektrogerät (4) identifizieren, von einem Kommunikationsmodul (1) erhalten werden;
- abhängig von den Identifikationsinformationen mittels des Kommunikationsmoduls (1) Konfigurationsinformationen drahtlos von dem externen Computersystem (10) angefordert und erhalten werden oder die Konfigurationsinformationen abhängig von den Identifikationsinformationen aus einem Speichergerät des Kommunikationsmoduls (1) ausgelesen werden, wobei die Konfigurationsinformationen den Identifikationsinformationen zugeordnet sind;
- das Kommunikationsmodul (1) abhängig von den Konfigurationsinformationen zur Steuerung der Kommunikation zwischen dem Elektrogerät (4) und dem externen Computersystem (10) konfiguriert wird; und
- die Kommunikation des Elektrogeräts (4) mit dem externen Computersystem (10) basierend auf den Konfigurationsinformationen mittels des Kommunikationsmoduls (1) gesteuert wird.

## Claims

1. A communication module (1) for communication of an electric appliance (4) with an external computer system (10), the communication module (1) comprising
- a first communication interface (5a), which is configured for wireless data exchange with the external computer system (10), and a second communication interface (5b), which is configured for data exchange with the electric appliance (4);
- a processing circuit (6), which is configured
- to obtain identification information, which identifies the electric appliance (4);
- to request and to obtain configuration information from the external computer system (10) depending on the identification information via the first communication interface (5a) or to readout the configuration information from a storage device of the communication module (1) depending on the identification information, wherein the configuration information is assigned to the identification information;
- to configure the processing circuit (6) for controlling the communication between the electric appliance (4) and the external computer system (19) according to the configuration information; and
- to control the communication of the electric appliance (4) with the external computer system (10) based on the configuration information.

2. The communication module (1) according to claim 1, comprising an electrical energy storage (7) for independent energy supply of the communication module (1).

3. The communication module (1) according to claim 2, wherein the energy storage (7) contains at least one battery cell.

4. The communication module (1) according to any one of the preceding claims, wherein the processing circuit (6) is configured to obtain a digital code from the electric appliance (4) via the second communication interface (5b) and to determine the identification information based on the digital code.

5. The communication module (1) according to any one of the preceding claims, comprising a reader (8a) for radio frequency identification, RFID, which is connected to the processing circuit (6) and is configured to obtain the identification information from an RFID transponder (8b) of the electric appliance (4).

6. The communication module (1) according to any one of the preceding claims, comprising an optical reader (9a), which is connected to the processing circuit (6) and configured to read a visually readable code (9b) of the electric appliance (4), wherein the processing circuit (6) is configured to determine the identification information based on the read visually readable code.

7. The communication module (1) according to any one of the preceding claims, comprising at least one electrical contact for electrical connection of the communication module (1) to the electric appliance (4), wherein the processing circuit (6)
- is connected to the at least one electrical contact and configured to determine a voltage value and/or a resistance value at the at least one electrical contact when the communication module (1) is connected to the electric appliance (4) by the at least one electrical contact; and
- to determine the identification information based on the voltage value and/or the resistance value.

8. The communication module (1) according to any one of the preceding claims, wherein the one second communication interface (5b) is configured as a universal asynchronous receiver transmitter interface.

9. The communication module (1) according to any one of claims 1 to 7, wherein the one second communication interface (5b) is configured as an I²C interface.

10. The communication module (1) according to any one of the preceding claims, wherein the processing circuit (6) is configured to obtain a request, a command or a dataset from the electric appliance (4) via the second communication interface (5b) and
- to transfer the request, the command or the dataset to the external computer system (10) via the first communication interface (5a) according to the configuration effected on the basis of the configuration information; or
- to process the request, the command or the dataset and to transfer the processed request, the processed command or the processed dataset to the external computer system (10) via the first communication interface (5a) according to the configuration effected on the basis of the configuration information.

11. The communication module (1) according to any one of the preceding claims, wherein the processing circuit (6) is configured to obtain a further request, a further command or a further dataset from the external computer system (10) via the first communication interface (5a) and
- to transfer the further request, the further command or the further dataset to the electric appliance (4) via the second communication interface (5b) according to the configuration information; or
- to control or to parametrize the electric appliance (4) according to the configuration information depending on the further request, the further command or the further dataset.

12. The communication module (1) according to any one of the preceding claims, comprising a housing (2), within which the processing circuit (6) is arranged.

13. The communication module (1) according to claim 12, wherein the first communication interface (5a) and/or the second communication interface (5b) are arranged within the housing (2).

14. The communication module (1) according to any one of claims 12 or 13, wherein the housing (2) comprises mechanical connection means (3) for detachable mechanical connection of the communication module (1) to the electric appliance (4).

15. A method for communication of an electric appliance (4) with an external computer system (10), wherein
- identification information, which identifies the electric appliance (4), is obtained by a communication module (1);
- configuration information is wirelessly requested and obtained from the external computer system (10) by the communication module (1) depending on the identification information or the configuration information is readout from a storage device of the communication module (1) depending on the identification information, wherein the configuration information is assigned to the identification information;
- the communication module (1) is configured for controlling the communication between the electric appliance (4) and the external computer system (10) depending on the configuration information; and
- the communication of the electric appliance (4) with the external computer system (10) is controlled by the communication module (1) based on the configuration information.

## Revendications

1. Module de communication (1) destiné à la communication entre une unité électrique (4) et un système informatique externe (10), le module de communication (1) comportant
- une première interface de communication (5a), qui est conçue pour échanger des données sans fil avec le système informatique externe (10), et une deuxième interface de communication (5b), qui est conçue pour échanger des données avec l'unité électrique (4) ;
- un circuit de traitement (6) qui est conçu pour
- obtenir des informations d'identification qui identifient l'unité électrique (4) ;
- demander et obtenir des informations de configuration du système informatique externe (10) en fonction des informations d'identification par le biais de la première interface de communication (5a) ou lire les informations de configuration dans une unité de mémorisation du module de communication (1) en fonction des informations d'identification, les informations de configuration étant associées aux informations d'identification ;
- configurer le circuit de traitement (6) pour commander la communication entre l'unité électrique (4) et le système informatique externe (19) en fonction des informations de configuration ; et
- commander la communication entre l'unité électrique (4) et le système informatique externe (10) sur la base des informations de configuration.

2. Module de communication (1) selon la revendication 1, comportant un accumulateur d'énergie électrique (7) destiné l'alimentation autonome en énergie du module de communication (1).

3. Module de communication (1) selon la revendication 2, l'accumulateur d'énergie (7) contenant au moins un élément d'accumulateur.

4. Module de communication (1) selon l'une des revendications précédentes, le circuit de traitement (6) étant conçu pour recevoir un code numérique de l'unité électrique (4) par le biais de la deuxième interface de communication (5b) et pour déterminer les informations d'identification sur la base du code numérique.

5. Module de communication (1) selon l'une des revendications précédentes, comportant une unité de lecture (8a) destinée à l'identification radiofréquence, RFID, laquelle est reliée au circuit de traitement (6) et est conçue pour lire les informations d'identification d'un transpondeur RFID (8b) de l'unité électrique (4).

6. Module de communication (1) selon l'une des revendications précédentes, comportant une unité de lecture optique (9a) qui est reliée au circuit de traitement (6) et qui est conçue pour lire un code lisible visuellement (9b) de l'unité électrique (4), le circuit de traitement (6) étant conçu pour déterminer les informations d'identification sur la base du code lisible visuellement.

7. Module de communication (1) selon l'une des revendications précédentes, comportant au moins un contact électrique destiné à relier électriquement le module de communication (1) à l'unité électrique (4), le circuit de traitement (6)
- étant relié à l'au moins un contact électrique et conçu pour déterminer une valeur de tension et/ou une valeur de résistance au niveau de l'au moins un contact électrique lorsque le module de communication (1) est relié à l'unité électrique (4) au moyen de l'au moins un contact électrique ; et
- pour déterminer les informations d'identification sur la base de la valeur de tension et/ou de la valeur de résistance.

8. Module de communication (1) selon l'une des revendications précédentes, la deuxième interface de communication (5b) étant conçue comme une interface récepteur-transmetteur asynchrone universelle.

9. Module de communication (1) selon l'une des revendications 1 à 7, la deuxième interface de communication (5b) étant conçue comme une interface I²C.

10. Module de communication (1) selon l'une des revendications précédentes, le circuit de traitement (6) étant conçu pour
- recevoir une requête, une instruction ou un ensemble de données de l'unité électrique (4) par le biais de la deuxième interface de communication (5b) et
- transmettre la requête, l'instruction ou l'ensemble de données au système informatique externe (10) par le biais de la première interface de communication (5a) conformément à la configuration effectuée sur la base des informations de configuration ; ou
- traiter la requête, l'instruction ou l'ensemble de données et transmettre la requête traitée, l'instruction traitée ou l'ensemble de données traité au système informatique externe (10) par le biais de la première interface de communication (5a) conformément à la configuration effectuée sur la base des informations de configuration.

11. Module de communication (1) selon l'une des revendications précédentes, le circuit de traitement (6) étant conçu pour
- recevoir une autre requête, une autre instruction ou un autre ensemble de données du système informatique externe (10) par le biais de la première interface de communication (5a) et
- transmettre l'autre requête, l'autre instruction ou l'autre ensemble de données à l'unité électrique (4) par le biais de la deuxième interface de communication (5b) conformément aux informations de configuration ; ou
- commander ou paramétrer l'unité électrique (4) conformément aux informations de configuration en fonction de l'autre requête, de l'autre instruction ou de l'autre ensemble de données.

12. Module de communication (1) selon l'une des revendications précédentes, comportant un boîtier (2) à l'intérieur duquel est disposé le circuit de traitement (6) .

13. Module de communication (1) selon la revendication 12, la première interface de communication (5a) et/ou la deuxième interface de communication (5b) étant disposées à l'intérieur du boîtier (2).

14. Module de communication (1) selon l'une des revendications 12 ou 13, le boîtier (2) comportant des moyens de liaison mécanique (3) pour relier mécaniquement et de manière amovible le module de communication (1) à l'unité électrique (4).

15. Procédé de communication entre une unité électrique (4) et un système informatique externe (10),
- des informations d'identification qui identifient l'unité électrique (4) étant reçues d'un module de communication (1) ;
- des informations de configuration étant demandées et obtenues sans fil du système informatique externe (10) au moyen du module de communication (1) en fonction des informations d'identification, ou les informations de configuration étant lues dans une unité de mémorisation du module de communication (1) en fonction des informations d'identification, les informations de configuration étant associées aux informations d'identification ;
- le module de communication (1) étant conçu pour commander la communication entre l'unité électrique (4) et le système informatique externe (10) en fonction des informations de configuration ; et
- la communication de l'unité électrique (4) avec le système informatique externe (10) étant commandée sur la base des informations de configuration à l'aide du module de communication (1).
